# EUROPÄISCHE PATENTSCHRIFT

(11) **EP 2 681 786 B1**
(45) Veröffentlichungstag und Bekanntmachung des Hinweises auf die Patenterteilung: **08.05.2019**
(21) Anmeldenummer: 12708108.1
(22) Anmeldetag: 29.02.2012
(51) Int. Cl.: H01M 4/04, H01M 10/0562, H01M 10/0525, H01M 4/485, H01M 4/1391

(54) **LITHIUM-TITAN-MISCHOXID**
LITHIUM-TITANIUM MIXED OXIDE
OXYDE MIXTE DE LITHIUM ET DE TITANE

(30) Priorität: 01.03.2011 DE 102011012713
(43) Veröffentlichungstag der Anmeldung: 08.01.2014
(73) Patentinhaber: Johnson Matthey PLC, London EC4A 4AB (GB)
(72) Erfinder: HOLZAPFEL, Michael, 85354 Freising (DE); NUSPL, Gerhard, 81543 München (DE)
(74) Vertreter: Gleave, Robert James
(86) Internationale Anmeldenummer: PCT/EP2012/053447
(87) Internationale Veröffentlichungsnummer: WO 2012/117023

(56) Entgegenhaltungen:
- DE-A1- 10 250 747
- JP-A- 2002 212 705
- JP-A- 2003 048 719
- JP-A- 2010 238 387
- US-A1- 2009 226 635
- XU X ET AL: "High lithium ion conductivity glass-ceramics in Li2O-Al2O3-TiO2-P2O5 from nanoscaled glassy powders by mechanical milling", SOLID STATE IONICS, NORTH HOLLAND PUB. COMPANY. AMSTERDAM; NL, NL, Bd. 177, Nr. 26-32, 31. Oktober 2006 (2006-10-31), Seiten 2611-2615, XP025033527, ISSN: 0167-2738, DOI: 10.1016/J.SSI.2006.04.010 [gefunden am 2006-10-31]

## Beschreibung

Die vorliegende Erfindung betrifft ein Verfahren zur Herstellung eines Lithium-Titan-Mischoxids, ein Lithium-Titan-Mischoxid, eine Verwendung desselben und eine Anode und eine Sekundärlithiumionenbatterie enthaltend das Lithium-Titan-Mischoxid.

Gemischte dotierte oder nicht-dotierte Lithium-Metalloxide haben Bedeutung als Elektrodenmaterialien in sogenannten "Lithiumionenbatterien" erlangt. Beispielsweise werden Lithium-Ionen-Akkumulatoren, auch Sekundärlithiumionenbatterien genannt, als vielversprechende Batteriemodelle für batteriegetriebene Kraftfahrzeuge betrachtet. Lithiumionenbatterien finden zudem Anwendung in beispielsweise Elektrowerkzeugen, Computern und Mobiltelefonen. Insbesondere bestehen dabei die Kathoden und Elektrolyte, aber auch die Anoden, aus lithiumhaltigen Materialien.

Als Kathodenmaterialien werden beispielsweise LiMn₂O₄ und LiCoO₂ verwendet. Goodenough et al. (US 5,910,382) schlagen dotierte oder nicht-dotierte gemischte Lithiumübergangsmetallphosphate, insbesondere LiFePO₄, als Kathodenmaterial für Lithiumionenbatterien vor.

Als Anodenmaterialien können beispielsweise Graphit oder auch, wie oben erwähnt, Lithiumverbindungen, z.B. Lithiumtitanate, insbesondere für großvolumige Batterien verwendet werden.

Für den Festelektrolyten, auch Festkörperelektrolyt genannt, der Sekundärlithiumionenbatterien werden typischerweise Lithiumsalze eingesetzt. Beispielsweise werden in der JP-A 1990-2-225310 Lithiumtitanphosphate als Festelektrolyte vorgeschlagen. Lithiumtitanphosphate weisen je nach Struktur und Dotierung eine erhöhte Lithiumionenleitfähigkeit und eine geringe elektrische Leitfähigkeit auf. Dies und ihre große Härte lässt sie als geeignete Festelektrolyten in Sekundärlithiumionenbatterien erscheinen. Eine Dotierung der Lithiumtitanphosphate, beispielsweise mit Aluminium, Magnesium, Zink, Bor, Scandium, Yttrium und Lanthan beeinflusst die ionische (Lithium-)Leitfähigkeit von Lithiumtitanphosphaten. Insbesondere die Dotierung mit Aluminium führt zu guten Ergebnissen, da Aluminium je nach Dotierungsgrad eine hohe Lithiumionenleitfähigkeit verglichen mit anderen Dotierungsmetallen zur Folge hat und aufgrund seines Kationenradius (kleiner als Ti⁴⁺) im Kristall die Plätze des Titans gut einnehmen kann.

Lithiumtitanate, insbesondere Lithiumtitanat Li₄Ti₅O₁₂, Lithium-Titan-Spinell zeigen als Anodenmaterial in wiederaufladbaren Lithiumionenbatterien gegenüber Graphit einige Vorteile. Beispielsweise besitzt Li₄Ti₅O₁₂ gegenüber Graphit eine bessere Zyklenbeständigkeit, eine höhere thermische Belastbarkeit, sowie verbesserte Betriebssicherheit. Lithium-Titan-Spinell weist eine relativ konstante Potentialdifferenz von 1,55 V gegenüber Lithium auf und durchläuft mehrere tausend Lade- und Entladezyklen mit einem Kapazitätsverlust von nur < 20 %. Somit zeigt Lithiumtitanat ein deutlich positiveres Potential als Graphit und zudem eine hohe Lebensdauer.

Die Herstellung von Lithiumtitanat Li₄Ti₅O₁₂ erfolgt typischerweise mittels einer Festkörperreaktion zwischen einer Titanverbindung, z.B. TiO₂, mit einer Lithiumverbindung, z.B. Li₂CO₃, bei Temperaturen über 750°C (US 5,545,468). Die Kalzinierung bei über 750°C wird durchgeführt, um relativ reines, gut kristallisierbares Li₄Ti₅O₁₂ zu erhalten, was jedoch den Nachteil mit sich bringt, dass zu grobe Primärpartikel entstehen und eine teilweise Versinterung des Materials auftritt. Aus diesem Grund muss das erhaltene Produkt aufwändig vermahlen werden, was zu weiteren Verunreinigungen führt. Typischerweise entstehen durch die hohen Temperaturen auch oftmals Nebenprodukte wie Rutil bzw. Reste von Anatas, die im Produkt bleiben (EP 1 722 439 A1).

Lithium-Titan-Spinell kann auch durch ein sogenanntes Sol-Gel-Verfahren erhalten werden (DE 103 19 464 A1), wobei jedoch teurere Titanausgangsverbindungen eingesetzt werden müssen, als bei der Herstellung mittels Festkörperreaktion unter Einsatz von TiO₂. Als weitere Herstellungsverfahren von Lithiumtitanat wird Flammpyrolyse (Ernst, F.O. et al., Materials Chemistry and Physics 2007, 101 (2-3) S. 372 - 378), sowie sogenannte "Hydrothermalverfahren" in wasserfreien Medien (Kalbac M. et al., Journal of Solid State Electrochemistry 2003, 8(1) S. 2 - 6) vorgeschlagen.

Lithiumübergangsmetallphosphate für Kathodenmaterialien können z.B. mittels Festkörperverfahren hergestellt werden. Die EP 1 195 838 A2 beschreibt ein derartiges Verfahren, insbesondere zur Herstellung von LiFePO₄, wobei typischerweise Lithiumphosphat und Eisen(II)phosphat gemischt und bei Temperaturen von ungefähr 600°C gesintert werden. Das durch Festkörperverfahren erhaltene Lithiumübergangsmetallphosphat wird typischerweise mit Leitruß versetzt und zu Kathodenformulierungen verarbeitet. Die WO 2008/062111 A2 beschreibt ferner ein kohlenstoffhaltiges Lithiumeisenphosphat, das durch die Bereitstellung einer Lithium-Quelle, einer Eisen(II)-Quelle, einer Phosphor-Quelle, einer Sauerstoff-Quelle und einer Kohlenstoff-Quelle hergestellt wurde, wobei das Verfahren einen Pyrolyseschritt der Kohlenstoff-Quelle umfasst. Durch die Pyrolyse wird auf der Oberfläche des Lithiumeisenphosphatpartikels eine Kohlenstoffbeschichtung ausgebildet. Auch die EP 1 193 748 beschreibt sogenannte Kohlenstoffkompositmaterialien aus LiFePO₄ und amorphen Kohlenstoff, der bei der Herstellung des Eisenphosphats als Reduktionsmittel und zur Verhinderung der Oxidation von Fe(II) zu Fe(III) dient. Außerdem soll die Zugabe von Kohlenstoff die Leitfähigkeit des Lithiumeisenphosphatmaterials in der Kathode erhöhen. In der EP 1 193 786 wird beispielsweise angegeben, dass nur ein Gehalt von nicht weniger als 3 Gew.-% Kohlenstoff in einem Lithiumeisenphosphat-Kohlenstoffmaterial eine gewünschte Kapazität und entsprechende Zykluscharakteristika des Materials zur Folge haben.

Jedoch wird die Zyklenlebensdauer einer Lithiumionenbatterie auch durch die darin vorhandene Feuchtigkeit beeinflusst. D.R. Simon et al. (Characterization of Proton exchanged Li4Ti5O12 Spinel Material; Solid State Ionics: Proceedings of the 15th International Conference on Solid State Ionics, Part II, 2006. 177(26-32): S. 2759 - 2768), beschreiben beispielsweise, dass ein Lithiumtitanat, das 6 Monate an Luft gelagert war, einen Kapazitätsverlust von 6 % erlitt. Die Zyklenbeständigkeit des gelagerten Lithiumtitanats wurde jedoch nicht ermittelt.

US 2009/226635 A1 offenbart die Verwendung von Lithiumtitanat Li₄Ti₅O₁₂ als Anodenmaterial für eine Sekundärlithiumionenbatterie, wobei das Lithiumtitanat in einer Aufschlämmung auf ein Kollektorsubstrat in Form eines Dünnfilms aufgebracht und anschließend beispielsweise mittels eines Trocknertunnels getrocknet wird, so dass der Film 600 ppm oder weniger Wasser enthält.

Xu X. et al. ("High lithium ion conductivity glass-ceramics in Li2O-Al2O3-TiO2-P2O5 from nanoscaled glassy powders by mechanical milling", Solid State Ionics, North Holland Pub. Company, Amsterdam; NL, Bd. 177, Nr. 26-32, 31.10.2006, Seiten 2611-2615) beschreiben ein Verfahren zur Herstellung von Lithiumaluminiumtitanphosphat (Li_{1,4}Al_{0,4}Ti_{1,6}(PO₄)₃), bei dem die Ausgangsmaterialien zunächst mittels einer Planetenkugelmühle vermahlen werden. Nach anschließendem Kalzinieren bei 700°C in Luft wird nochmals eine mechanische Vermahlung unter hohem Energieaufwand bei Raumtemperatur durchgeführt.

JP 2002 212705 A betrifft ein Dünnschicht-Abscheidungsverfahren zur Bereitstellung von Dünnfilmen aus Lithiummetallen, wie beispielsweise Lithiumsulfid. Bei dem Dünnschicht-Abscheidungsverfahren wird der Taupunkt einer Atmosphäre, die mit den Ausgangsmaterialien in Kontakt kommt, auf -40°C gesteuert.

JP 2003 048719 A ist auf ein Verfahren zur Herstellung von Lithium-Nickel-Übergangsmetall-Kompositoxiden der allgemeinen Formel LiₓNi_{1-y}M_{y}O₂ gerichtet (wobei M ausgewählt ist aus Co, Mn, Fe, Cr, V, Ti, Cu, Al, Ga, Bi, Sn, Zn, Mg, Ge, Nb, Ta, Be, B, Ca, Sc and Zr, mit 0 < x ≤ 1.5 und 0 < y ≤ 1.0). Das Verfahren umfasst die Schritte des Bereitstellens einer Mischung aus einem Metalloxid und einer Lithiumverbindung, des Kalzinierens der Mischung bei einer Temperatur von 600 bis 1000°C und des Zerkleinerns des Zwischenprodukts unter Verwendung einer Nassmühle in einer Atmosphäre mit einem Taupunkt von nicht mehr als -30°C.

Während der Herstellung von Lithium-Titan-Mischoxiden, wie zum Beispiel Lithium-Titan-Spinell (LTO) oder Lithiumaluminiumtitanphosphat, kann immer zumindest zu einem Zeitpunkt Kontakt zu normaler Umgebungsluft bestehen. Dabei nimmt das Material, entsprechend seiner großen spezifischen Oberfläche von > 1 m²/g, für feinteiliges Lithiumtitanat sogar ca. 10 m²/g, Feuchtigkeit, d.h. Wasser aus der Luft auf. Diese Feuchtigkeitsaufnahme geht sehr schnell, typischerweise werden 500 ppm Wasser schon nach weniger als einer Minute aufgenommen und nach einem Tag sind mehrere 1000 ppm Wasser absorbiert. Die Feuchtigkeit wird zuerst auf der Oberfläche physisorbiert und sollte beim anschließenden Trocknen durch Ausheizen bei einer Temperatur > 100°C leicht wieder entfernt werden können. Jedoch wurde festgestellt, dass bei Anoden, die Lithium-Titan-Mischoxide, wie Lithium-Titan-Spinell und Lithiumaluminiumtitanphosphat, enthalten, die aufgenommene Feuchtigkeit nicht ohne weiteres durch Ausheizen wieder entfernt werden kann. Dadurch neigen Batterien, die Anoden aus derartigen Materialien enthalten, auch unter Einbeziehung eines Ausheiz-Vorgangs hergestellt wurden, zur Gasentwicklung. Diese unerwünschte Gasentwicklung wird möglicherweise durch im Lithium-Titan-Mischoxid chemisorbiertes Wasser hervorgerufen. Denn in einem Lithium-Titan-Mischoxid, wie Lithiumtitanat oder Lithiumaluminiumtitanphosphat, erfolgt relativ schnell eine Chemisorption des an der Oberfläche angelagerten Wassers unter H⁺/Li⁺-Austausch. Das Lithium befindet sich dann als Li₂O und/oder Li₂CO₃ in den Korngrenzen der Partikel oder an der Oberfläche der Partikel. Dieser Effekt tritt deutlich schneller auf als bisher beschrieben wurde. Nur eine lange Nachtrocknung bei Temperaturen von beispielsweise über 250°C während 24 Stunden oder mehr, kann das chemisorbierte Wasser wieder entfernen und die Herstellung von während des Betriebs nicht Gas entwickelnder Batterien ermöglichen. Jedoch kann bei längerer Lagerung des getrockneten Lithium-Titan-Mischoxidmaterials oder bei längerer Lagerung und beim Betrieb damit hergestellter Elektroden, Festelektrolyten oder Batterien, wieder Wasser aufgenommen werden und zu einer Gasentwicklung in den Batterien führen.

Aufgabe der vorliegenden Erfindung war es daher, ein Lithium-Titan-Mischoxid bereitzustellen, mit dem gegenüber bekannten Materialien verbesserte Elektroden und Batterien, insbesondere Sekundärlithiumionenbatterien, hergestellt werden können.

Diese Aufgabe wird gelöst durch ein Verfahren gemäss Anspruch 1.

Das Vermahlen erfolgt bei Raumtemperatur. Überraschend wurde gefunden, dass durch Vermahlen eines Lithium-Titan-Mischoxids in einer Atmosphäre mit einem Taupunkt < -50°C, beispielsweise mit trockener Luft eines derartigen Taupunkts, ein Material erhalten werden kann, welches die Herstellung von Lithium-Ionen-Batterien ermöglicht, die keine oder eine wesentlich verminderte Gasentwicklung zeigen, insbesondere während ihres Betriebes.

In einer Ausführungsform der Erfindung kann das Vermahlen der Mischung in trockener Atmosphäre mit einem Taupunkt < -50°C am Ende der Produktionskette nach dem Kalzinieren erfolgen. Dies ergibt ein besonders geeignetes Lithium-Titan-Mischoxid für die Herstellung von Lithium-Ionen-Batterien, denn bei der Kalzinierung und bei einer optionalen Vermahlung vor der Kalzinierung, ist das Mischoxid weniger empfindlich für Wasserabsorption. Jedoch auch ein Schritt des Vermahlens der Mischung im Verlauf des Herstellungsverfahrens, beispielsweise vor dem Kalzinieren der Mischung, kann in einer Atmosphäre mit einem Taupunkt < -50°C durchgeführt werden, um die Wasserabsorption zusätzlich zu vermindern.

In einer weiteren Ausführungsform ist es auch möglich, das Lithium-Titan-Mischoxid zu kalzinieren, dann zu lagern, z.B. unter Wasserausschluss, und erst kurz vor der Verwendung zur Erzeugung von Elektroden bzw. Festelektrolyten in einer Atmosphäre mit einem Taupunkt < -50°C zu vermahlen. Alternativ kann das in der Atmosphäre mit einem Taupunkt < -50°C vermahlene Lithium-Titan-Mischoxid direkt nach dem Schritt des Vermahlens am Ende der Produktionskette verarbeitet werden oder in einer Atmosphäre mit einem Taupunkt < -50°C gelagert werden.

Der Schritt des Vermahlens der Mischung in einer Atmosphäre mit einem Taupunkt < -50°C gemäß des Verfahrens der hier beschriebenen Ausführungsformen ermöglicht, dass weniger Wasser an der Oberfläche des Lithium-Titan-Mischoxids physisorbiert wird, und vermeidet auch eine Chemisorption des physisorbierten Wassers. Dadurch zeigen die mit dem erfindungsgemäßen Lithium-Titan-Mischoxid hergestellten Lithium-Ionen-Batterien weniger Gasentwicklung und ein stabileres Zyklenverhalten als bisherige Batterien.

In einer Ausführungsform des Verfahrens wird beim Vermahlen als Atmosphäre mit einem Taupunkt < -50°C (bei Raumtemperatur) eine Atmosphäre verwendet, die mindestens ein Gas, ausgewählt aus einem Inertgas, wie Argon, Stickstoff und deren Mischungen mit Luft, umfasst. Zudem kann die Atmosphäre einen Taupunkt < -70°C besitzen oder einen Taupunkt von < -50°C und zusätzlich erwärmt werden, z.B. auf 70°C, was die relative Feuchte noch zusätzlich herabsetzt. Diese Ausführungsformen der Erfindung führen zu einem besonders zyklusstabilen Lithium-Titan-Mischoxid.

Im Verfahren gemäß einer Ausführungsform kann als Lithiumverbindung Lithiumcarbonat und/oder ein Lithiumoxid verwendet werden. Wird diese Lithiumverbindung mit Titandioxid kalziniert und in einer Atmosphäre mit einem Taupunkt < -50°C vermahlen, wird ein Lithium-Titan-Spinell erhalten. Wird beim Bereitstellen der Mischung in einer anderen Ausführungsform des Verfahrens eine sauerstoffhaltige Phosphorverbindung, zum Beispiel eine Phosphorsäure, und eine sauerstoffhaltige Aluminiumverbindung, beispielsweise Al(OH)₃ zur Mischung aus Titandioxid und der Lithiumverbindung zugegeben, wird als das Lithium-Titan-Mischoxid ein Lithiumaluminiumtitanphosphat erhalten.

In einer weiteren Ausführungsform kann beim Bereitstellen der Mischung zusätzlich Kohlenstoff, z.B. elementarer Kohlenstoff, oder eine Kohlenstoffverbindung, z.B. eine Vorläuferverbindung von sogenanntem Pyrolysekohlenstoff, zugegeben werden, wodurch ein Lithium-Titan-Mischoxid erhalten werden kann, das mit einer Kohlenstoffschicht versehen ist. Das Kalzinieren erfolgt dabei bevorzugt unter Schutzgas. Die Kohlenstoffschicht kann beim Kalzinieren beispielsweise aus der Kohlenstoffverbindung in Form von Pyrolysekohlenstoff erhalten werden. In anderen Ausführungsformen wird das erhaltene Produkt vor oder nach dem Kalzinieren mit einer Lösung einer Kohlenstoff-Vorläuferverbindung, z. B. Lactose, Stärke, Glukose, Sucrose etc. getränkt und anschließend kalziniert, worauf die Beschichtung aus Kohlenstoff auf den Partikeln des Lithium-Titan-Mischoxids entsteht.

Das Lithium-Titan-Kompositoxid gemäß des Verfahrens weiterer Ausführungsformen kann Li₂TiO₃ und TiO₂ umfassen. Alternativ kann das Lithium-Titan-Kompositoxid Li₂TiO₃ und TiO₂, bei dem das molare Verhältnis von TiO₂ zu Li₂TiO₃ in einem Bereich von 1,3 bis 1,85 liegt, umfassen.

Zusätzlich kann im Verfahren gemäß einiger Ausführungsformen das Bereitstellen der Mischung ein zusätzliches Vermahlen der Mischung ungeachtet der Atmosphäre, in der die Vermahlung stattfindet, und/oder eine Kompaktierung der Mischung umfassen. Durch ersteres wird nach Durchlaufen des Verfahrens besonders feinteiliges Lithium-Titan-Mischoxid erhalten, da zwei Mahlschritte erfolgen. Ein Kompaktieren der Mischung kann als mechanische Kompaktion, z.B. mittels eines Walzenkompaktors oder einer Tablettenpresse erfolgen. Alternativ kann aber auch eine Roll-, Aufbau- bzw.

Feuchtgranulation durchgeführt werden. Im Verfahren gemäß Ausführungsformen kann das Kalzinieren ferner bei einer Temperatur von 700°C bis 950°C erfolgen.

In einer weiteren Ausführungsform wird das Vermahlen der Mischung in einer Atmosphäre mit einem Taupunkt < -50°C mit einer Strahlmühle durchgeführt. Die Strahlmühle vermahlt die Teilchen der Mischung erfindungsgemäß in einem Gasstrom der Atmosphäre mit einem Taupunkt <-50°C. Das Prinzip der Strahlmühle beruht auf dem Teilchen-Teilchen-Stoß im Hochgeschwindigkeitsgasstrom. Erfindungsgemäß wird der Hochgeschwindigkeitsgasstrom aus der Atmosphäre mit einem Taupunkt <-50°C, beispielsweise komprimierte Luft oder Stickstoff, erzeugt. Das Mahlgut wird dieser Atmosphäre zugeführt und über geeignete Düsen auf hohe Geschwindigkeiten beschleunigt. In der Strahlmühle wird die Atmosphäre durch die Düsen so stark beschleunigt, dass die Teilchen mitgerissen werden und im Brennpunkt aufeinander gerichteter Düsen aufeinander treffen und sich gegenseitig aufreiben. Dieses Mahlprinzip ist für die Zerkleinerung sehr harter Materialien, wie Aluminiumoxid, geeignet. Da innerhalb der Strahlmühle die Wechselwirkung der Teilchen mit der Wand der Mühle gering ist, erhält man fein zerkleinerte bzw. vermahlene Teilchen des Lithium-Titan-Mischoxids mit minimaler Verunreinigung. Weil der zum Vermahlen eingesetzte Gasstrom der Strahlmühle zudem einen Taupunkt <-50°C besitzt, enthält das erhaltene Mischoxid extrem wenig Feuchtigkeit bzw. Wasser oder ist im Wesentlichen frei davon. Nach dem Vermahlen der Mischung kann in der Strahlmühle eine Trennung des Mahlgutes von groben Teilchen mittels eines Zyklonabscheiders erfolgen, wobei die gröberen Teilchen dem Mahlprozess wieder zugeführt werden können.

In einer Ausführungsform des Verfahrens wird zur Herstellung des Lithium-Titan-Mischoxids die Mischung in der Atmosphäre mit einem Taupunkt < -50°C mit einer Dauer von ca. 0,5 bis 1,5 Stunden, bevorzugt 1 Stunde, und/oder bei einer Temperatur von ca. -80 bis 150°C durchgeführt. Durch Regulieren der Dauer des Vermahlens und/oder der Temperatur beim Vermahlen kann die Feinteiligkeit des Lithium-Titan-Mischoxids bzw. der Feuchtigkeitsgehalt der Atmosphäre, in der die Mischung vermahlen wird, eingestellt werden. Z.B. kann bei einem Durchsatz von ca. 20 kg/h in einem Füllbett von 15-20 kg in einer Luftstrahlmühle vom Typ 200AFG der Firma Alpine vermahlen werden, also ca. 1 Stunde lang. Es kann mit kaltem Stickstoff vermahlen werden, z.B. bei einer Temperatur bis zu weniger als -80°C, oder mit Heißdampf bei einer Temperatur > 120°C. Es kann alternativ mit Luft vermahlen werden, deren Temperatur in einem Bereich von 0°C bis fast 100°C eingestellt werden kann. Beispielsweise kann die Mahlluft mit einem Taupunkt von -40°C auf 70°C erwärmt werden. Dadurch sinkt die relative Feuchte ab und entspricht dem von Luft mit einem Taupunkt von ca. -60°C bei Raumtemperatur.

Eine weitere Ausführungsform der vorliegenden Erfindung betrifft ein Lithium-Titan-Mischoxid, das durch ein Verfahren nach einer der hier beschriebenen Ausführungsformen erhältlich ist. Eine weitere Ausführungsform betrifft ein Lithium-Titan-Mischoxid mit einem Wassergehalt ≤ 300 ppm. Eine andere Ausführungsform betrifft ein Lithiumtitanat mit einem Wassergehalt ≤ 800 ppm, bevorzugt ≤ 300 ppm. Derartige Lithium-Titan-Mischoxide sind durch das hier beschriebene Verfahren gemäß Ausführungsformen erhältlich.

Das Lithium-Titan-Mischoxid ist erfindungsgemäß dotiertes oder nicht dotiertes Li₄Ti₅O₁₂ (Lithium-Titan-Spinell).

Das Lithium-Titan-Mischoxid kann gemäß einiger Ausführungsformen der vorliegenden Erfindung 300 ppm oder weniger Wasser enthalten, das durch Chemisorption oder reversible Chemisorption gebunden ist. Das Lithium-Titan-Mischoxid kann gemäß anderen Ausführungsformen 800 ppm oder weniger Wasser enthalten, das durch Chemisorption oder reversible Chemisorption gebunden ist, insbesondere wenn das Lithium-Titan-Mischoxid ein Lithiumtitanat, z.B. Li₄Ti₅O₁₂ ist. Zudem kann das erfindungsgemäße Lithium-Titan-Mischoxid im Wesentlichen frei von durch Chemisorption oder reversible Chemisorption gebundenem Wasser sein.

In weiteren Ausführungsformen ist das Lithium-Titan-Mischoxid nicht-dotiert oder ist mit mindestens einem Metall, ausgewählt aus Mg, Nb, Cu, Mn, Ni, Fe, Ru, Zr, B, Ca, Co, Cr, V, Sc, Y, Al, Zn, La und Ga dotiert. Bevorzugt ist das Metall ein Übergangsmetall. Eine Dotierung kann eingesetzt werden, um eine weiter erhöhte Stabilität und Zyklenbeständigkeit des Lithium-Titan-Mischoxids bei Verwendung in einer Anode zu erzielen. Insbesondere wird dies erreicht, wenn die Dotierungsmetallionen einzeln oder mehrere davon in die Gitterstruktur eingebaut werden. Die Dotierungsmetallionen sind bevorzugt in einer Menge von 0,05 bis 3 Gew.-% oder 1 bis 3 Gew.-%, bezogen auf das gesamte gemischte Lithium-Titan-Mischoxid vorhanden. Die Dotierungsmetallkationen können entweder die Gitterplätze des Titans oder des Lithiums belegen. Beispielsweise kann zusätzlich zur Lithiumverbindung und dem TiO₂ als Metallverbindung des Dotierungsmetalls, ein Oxid oder ein Carbonat, Acetat oder Oxalat zugegeben werden.

Das Lithium-Titan-Mischoxid kann ferner gemäß weiteren Ausführungsformen ein weiteres Lithiumoxid, z.B. eine Lithiumübergangsmetalloxoverbindung, enthalten. Wird ein derartiges Lithium-Titan-Mischoxid in einer Elektrode einer Sekundärlithiumionenbatterie eingesetzt, besitzt die Batterie ein besonders günstiges Zyklusverhalten.

In einer anderen Ausführungsform umfasst das Lithium-Titan-Mischoxid, wie bereits oben zum Verfahren gemäß einiger Ausführungsformen erläutert wurde, eine Kohlenstoffschicht, bzw. genauer gesagt, die Partikel des Lithium-Titan Mischoxids weisen eine Kohlenstoffbeschichtung auf. Ein derartiges Lithium-Titan-Mischoxid eignet sich insbesondere für den Einsatz in einer Elektrode einer Batterie, und fördert die Stromdichte und die Zyklenbeständigkeit der Elektrode.

Das erfindungsgemäße Lithium-Titan-Mischoxid wird in einer Ausführungsform als Material für eine Elektrode und eine Anode für eine Sekundärlithiumionenbatterie verwendet.

In einer Anode für eine Sekundärlithiumionenbatterie ist gemäß einer weiteren Ausführungsform das Lithium-Titan-Mischoxid ein dotiertes oder nicht-dotiertes Lithiumtitanat, nämlich Li₄Ti₅O₁₂, gemäss Anspruch 11 Ist das Lithium-Titan-Mischoxid der oben beschriebenen Ausführungsformen ein dotiertes oder nicht-dotiertes Lithiumtitanmetallphosphat oder ein dotiertes oder nicht-dotiertes Lithiumaluminiumtitanphosphat, eignet es sich für einen Festelektrolyten für eine Sekundärlithiumionenbatterie. Somit betrifft eine Ausführungsform der Anmeldung einen Festelektrolyten für eine Sekundärlithiumionenbatterie, der ein derartiges Lithium-Titan-Mischoxid enthält.

Ferner betrifft die Anmeldung eine Sekundärlithiumionenbatterie, die eine Anode gemäß Ausführungsformen, beispielsweise aus einem Lithium-Titan-Mischoxid, das ein dotiertes oder nicht-dotiertes Lithiumtitanoxid oder ein dotiertes oder nicht-dotiertes Lithiumtitanat ist, umfasst. Desweiteren kann die Sekundärlithiumionenbatterie einen Festelektrolyten enthalten, der ein Lithium-Titan-Mischoxid enthält, das ein dotiertes oder nicht-dotiertes Lithiumtitanmetallphosphat oder ein dotiertes oder nicht-dotiertes Lithiumaluminiumtitanphosphat gemäß Ausführungsformen ist.

Weitere Merkmale und Zweckmäßigkeiten ergeben sich aus der folgenden Beschreibung von Beispielen von Ausführungsformen und aus den Unteransprüchen.

Alle hier beschriebenen und sich nicht gegenseitig ausschließenden Merkmale von Ausführungsformen können miteinander kombiniert werden. Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen.

### Ausführungsbeispiele

### 1. Messmethoden

Die Bestimmung der BET-Oberfläche erfolgte gemäß DIN 66131 (DIN-ISO 9277). Dafür wurden als Messgeräte Micromeritics Gemini V oder Micromeritics Gemini VII verwendet.

Die Bestimmung der Partikelgrößenverteilung erfolgte mittels Lasergranulometrie mit einem Malvern Hydro 20005 Gerät gemäß DIN 66133.

Die Messung des Röntgenpulverdiffraktogramms (XRD) erfolgte mit einem Siemens XPERTSYSTEM PW3040/00 und der Software DY784.

Der Wassergehalt wurde mit Karl-Fischer-Titration analysiert.

Dabei wurde die Probe bei 200°C ausgeheizt und die Feuchtigkeit wurde in einer Vorlage, die die Karl-Fischer-Analysenlösung enthielt, kondensiert und bestimmt.

### Beispiel 1:(nicht die Erfindung)

### Herstellung von Li_{1,3}Al_{0,3}Ti_{1,7}(PO₄)₃

In einem Reaktionsgefäß wurden 1037,7 g ortho-Phosphorsäure (85 %) vorgelegt. Über eine Fluidrinne wurde langsam unter starkem Rühren mit einem teflonbeschichteten Ankerrührer ein Gemisch aus 144,3 g Li₂CO₃, 431,5 g TiO₂ (in Anatas-Form) und 46,8 g Al(OH₃) (Hydrargillit) zugegeben. Da das Li₂CO₃ mit der Phosphorsäure unter starkem Aufschäumen der Suspension durch Entstehen von CO₂ abreagierte, wurde die Zumischung sehr langsam über einem Zeitraum von 1 bis 1,5 Stunden zugegeben. Anschließend wurde die Mischung in einem Ofen auf 225 °C aufgeheizt und zwei Stunden bei dieser Temperatur belassen. Es entsteht ein hartes krümeliges Rohprodukt, das sich aus dem Reaktionsgefäß teilweise nur schwer entfernen ließ. Die vollständige Erstarrung der Suspension vom flüssigen Zustand über eine gummiartige Konsistenz erfolgte relativ rasch. Anstelle eines Ofens kann jedoch auch z.B. ein Sand- oder Ölbad verwendet werden.

Die feste Mischung wurde nun innerhalb von sechs Stunden von 200 auf 900 °C erhitzt, bei einem Aufheizintervall von 2 °C je Minute. Anschließend wurde das Produkt bei 900 °C für 24 Stunden gesintert und kalziniert.

Dann wurde die kalzinierte Mischung in einer Strahlmühle in einer Atmosphäre mit einem Taupunkt < -50°C und mit einer Temperatur von 25 °C bei ca. 20 kg Füllbett mit einem Durchsatz von ca. 7 kg pro Stunde ca. 4 Stunden lang fein vermahlen. Als Strahlmühle wurde die Alpine 200AFG der Firma Hosokawa Alpine eingesetzt, die eine Einstellung der Temperatur und des Gasstroms ermöglicht. Die Strahlmühle wurde bei 11500 U/min betrieben.

### Vergleichsbeispiel 1

Zur Erzeugung eines Vergleichsbeispiels 1 wurden die gleichen Ausgangsmaterialien dem gleichen Herstellungsverfahren wie in Beispiel 1 unterworfen, jedoch mit Vermahlen der kalzinierten Mischung in einer Strahlmühle mit nicht getrockneter Luft unter üblichen technischen Bedingungen (nicht behandelte Druckluft aus dem Kompressor der Strahlmühle, Taupunkt ca. 0 °C). Die Sinterung wurde hier über 12 h bei 950°C ausgeführt und ein Lithiumaluminiumtitanphosphat erhalten.

Schließlich wurde der Wassergehalt des gemäß Beispiel 1 erhaltenen Li_{1,3}Al_{0,3}Ti_{1,7}(PO₄)₃ und des Vergleichsbeispiels 1 bestimmt und ein Wert von 250 ppm für das erfindungsgemäße Produkt und ein Wert von 1500 ppm für das Vergleichsbeispiel 1 gefunden.

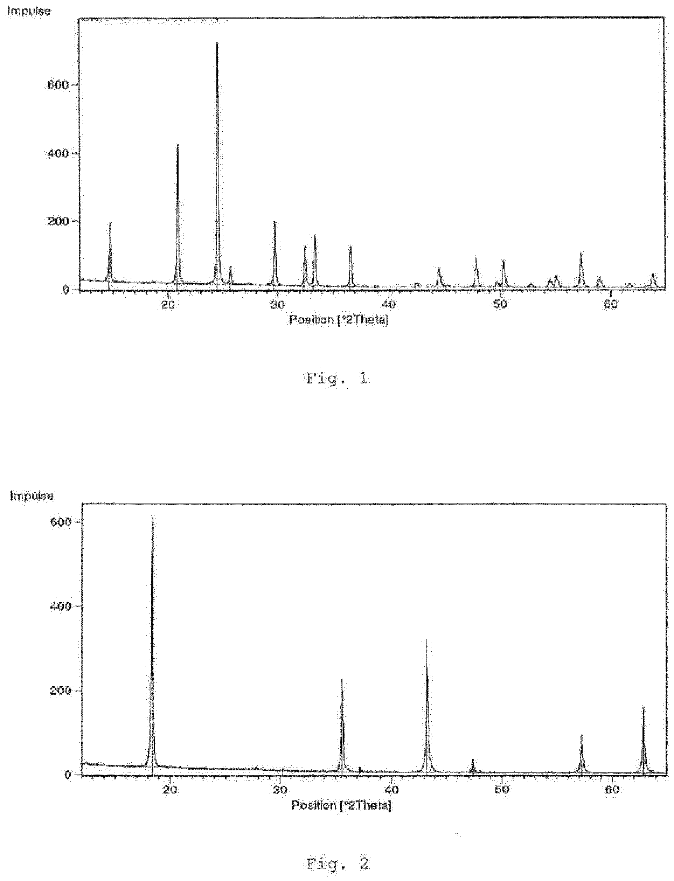

Die Bestimmung der BET-Oberfläche des Beispiels 1 ergab ca. 3 m²/g. Die Partikelgrößenverteilung des Beispiels 1 belief sich auf D₅₀ = 1,56 µm. Die XRD-Messung der Fig. 1 für das Beispiel 1 zeigte phasenreines Li_{1,3}Al_{0,3}Ti_{1,7}(PO₄)₃.

Die Struktur des erfindungsgemäß erhaltenen Produktes Li_{1,3}Al_{0,3}Ti_{1,7}(PO₄)₃ ist ähnlich einer sogenannten NASiCON (Na⁺ superionic conductor) Struktur (s. Nuspl et al. J. Appl. Phys. Vol. 06, Nr. 10, S. 5484 ff (1999)). Die dreidimensionalen Li⁺-Kanäle der Kristallstruktur und eine gleichzeitig sehr niedrige Aktivierungsenergie von 0,30 eV für die Li-Migration in diesen Kanälen bewirken eine hohe intrinsische Li-Ionen Leitfähigkeit. Die Al-Dotierung beeinflusst diese intrinsische Li⁺-Leitfähigkeit kaum, sondern setzt die Li-Ionen-Leitfähigkeit an den Korngrenzen herab.

In einer Abwandlung des Beispiels 1 kann die Synthese von Li_{1,3}Al_{0,3}Ti_{1,7}(PO₄)₃ auch dadurch erfolgen, dass nach Ende der Zugabe der Mischung aus Lithiumcarbonat, TiO₂ und Al(OH)₃ die weiße Suspension in ein Gefäß mit Antihaftbeschichtung transferiert wird, beispielsweise in ein Gefäß mit Teflonwänden. Dadurch wird die Entfernung des gehärteten Zwischenproduktes deutlich erleichtert. Ferner kann in einer Modifikation des Verfahrens gemäß Beispiel 1 eine erste Kalzinierung der trockenen Mischung über 12 Stunden nach Abkühlen auf Raumtemperatur gefolgt von einer zweiten Kalzinierung über weitere 12 Stunden bei 900 °C durchgeführt werden. Dabei wird jeweils ein Li_{1,3}Al_{0,3}Ti_{1,7}(PO₄)₃ erhalten, das ebenfalls einen Wassergehalt unter 300 ppm zeigte.

### Beispiel 2

### Herstellung von Li₄Ti₅O₁₂

Es wurden 16 kg TiO₂ und 6 kg (luftstrahlvermahlenes) Li₂CO₃ in eine Rührvorrichtung eingebracht. Hierzu wurde ein Mischgerät des Typs "Lödige Mischer" verwendet. Etwa 440 g der vorbezeichneten Zusammensetzung der Ausgangsmaterialien wurden über 1h bei einer Leistungsaufnahme von 1 kW ohne Kühlung gerührt. Anschließend wurde die so erhaltene Mischung 17h bei 950°C gesintert und kalziniert. Schließlich wurde die kalzinierte Mischung in der Strahlmühle Alpine 200AFG der Firma Hosokawa Alpine in einer Luft-Atmosphäre mit einem Taupunkt < -50°C und einer Temperatur von 50 °C eine Stunde lang fein vermahlen. So wurde ein erfindungsgemäßer Lithium-Titan-Spinell erhalten.

### Vergleichsbeispiel 2

Ein Vergleichsbeispiel 2 wurde aus den gleichen Ausgangsmaterialien und mit dem gleichen Herstellungsverfahren wie Beispiel 2 erhalten. Das Vermahlen der kalzinierten Mischung erfolgte wie in Vergleichsbeispiel 1. Die Sinterung wurde hier über 12 h bei 950°C ausgeführt und ein Lithium-Titan-Spinell erhalten.

Die Bestimmung der BET-Oberfläche des Beispiels 2 ergab ca. 3 m²/g. Die Partikelgrößenverteilung des Beispiels 2 belief sich auf D₅₀ = 1,96 µm. Die XRD-Messung der Fig. 2 für das Beispiel 2 zeigte phasenreines Li₄Ti₅O₁₂.

Schließlich wurde der Wassergehalt des gemäß Beispiel 2 erhaltenen erfindungsgemäßen Li₄Ti₅O₁₂ und des Vergleichsbeispiels 2 bestimmt und ein Wert von 250 ppm für das erfindungsgemäße Li₄Ti₅O₁₂ und von 1750 ppm für das Vergleichsbeispiels 2 gefunden.

### Beispiel 3

### Herstellung von kohlenstoffhaltigem Li₄Ti₅O₁₂ Variante 1

9,2 kg LiOH·H₂O wurden in 45 l Wasser gelöst und anschließend 20,8 kg TiO₂ zugegeben. Es wurden nun 180 g Laktose zugegeben, so dass ein Ansatz mit 60 g Laktose/kg LiOH+TiO₂ gefahren wurde. Anschließend wurde die Mischung in einem Nubilosa-Sprühtrockner bei einer Eingangstemperatur von ca. 300 °C und einer Ausgangstemperatur von 100 °C sprühgetrocknet. Es bildeten sich zunächst poröse sphärische Aggregate in der Größenordnung von mehreren Mikrometern.

Anschließend wurde das so erhaltene Produkt bei 750 °C für 5h unter Stickstoffatmosphäre kalziniert.

Schließlich wurde die kalzinierte Mischung in der Strahlmühle in einer Luft-Atmosphäre mit einem Taupunkt < -50°C und einer Temperatur von 25 °C eine Stunde lang fein vermahlen.

Der Wassergehalt des so erzeugten kohlenstoffhaltigen Li₄Ti₅O₁₂ gemäß Beispiel 3 betrug 278 ppm.

### Vergleichsbeispiel 3

Als Vergleichsbeispiel 3 wurde mit den gleichen Ausgangsmaterialien und dem gleichen Herstellungsverfahren kohlenstoffhaltiges Li₄Ti₅O₁₂ erzeugt. Das Vermahlen der kalzinierten Mischung erfolgte wie in Vergleichsbeispiel 1. Die Sinterung wurde hier über 5 h bei 750°C ausgeführt.

Der Wassergehalt des so erzeugten kohlenstoffhaltigen Li₄Ti₅O₁₂ des Vergleichsbeispiels 3 betrug 1550 ppm.

### Beispiel 4

### Herstellung von kohlenstoffhaltigem Li₄Ti₅O₁₂ Variante 1

9,2 kg LiOH·H₂O wurden in 45 l Wasser gelöst und anschließend 20,8 kg TiO₂ zugegeben. Anschließend wurde die Mischung in einem Nubilosa-Sprühtrockner bei einer Eingangstemperatur von ca. 300 °C und einer Ausgangstemperatur von 100 °C sprühgetrocknet. Es bildeten sich zunächst poröse sphärische Aggregate in der Größenordnung von mehreren Mikrometern.

Das erhaltene Produkt wurde mit 180 g Laktose in 1 l Wasser getränkt und anschließend bei 750 °C für 5h unter Stickstoffatmosphäre kalziniert.

Schließlich wurde die kalzinierte Mischung in der Strahlmühle in einer Luft-Atmosphäre mit einem Taupunkt < -50°C und einer Temperatur von 25 °C eine Stunde lang fein vermahlen.

Der Wassergehalt des so erzeugten kohlenstoffhaltigen Li₄Ti₅O₁₂ gemäß Beispiel 4 betrug 289 ppm.

### Vergleichsbeispiel 4

Als Vergleichsbeispiel 4 wurde mit den gleichen Ausgangsmaterialien und dem gleichen Herstellungsverfahren kohlenstoffhaltiges Li₄Ti₅O₁₂ erzeugt. Das Vermahlen der kalzinierten Mischung erfolgte wie in Vergleichsbeispiel 1. Die Sinterung wurde hier über 5 h bei 750°C ausgeführt.

Der Wassergehalt des so erzeugten kohlenstoffhaltigen Li₄Ti₅O₁₂ des Vergleichsbeispiels 4 betrug 1650 ppm.

### Beispiel 5

Dieses Beispiel betrifft Lithiumtitanat Li₄Ti₅O₁₂, das durch die thermische Umsetzung eines Kompositoxids enthaltend Li₂TiO₃ und TiO₂, wobei das molare Verhältnis von TiO₂ zu Li₂TiO₃ in einem Bereich von 1,3 bis 1,85 liegt, erhalten wurde. Dazu wird auf die Patentanmeldung DE 10 2008 026 580.2 Bezug genommen, die hier durch Bezugnahme im vollen Umfang enthalten ist.

LiOH·H₂O wurde zunächst in destilliertem Wasser gelöst und auf eine Temperatur von 50 bis 60 °C erwärmt. Nach vollständiger Auflösung des Lithiumhydroxid wurde eine Menge festes TiO₂ in Anatasmodifikation (erhältlich von der Firma Sachtleben), wobei die Menge zur Ausbildung des Kompositoxids 2 Li₂TiO₃/3 TiO₂ ausreichte, unter ständigem Rühren zur 50 bis 60 °C warmen Lösung zugegeben. Nach homogener Verteilung des Anatas wurde die Suspension in einen Autoklaven gegeben, wobei die Umsetzung anschließend unter andauerndem Rühren bei einer Temperatur von 100 °C bis 250 °C, typischerweise bei 150 bis 200 °C über eine Dauer von ca. 18 Stunden stattfand.

Als Autoklaven wurden Autoklaven der Firma Parr (Parr Pressure Reactive 4843) mit Doppelrührer und einer Heizwendel aus Stahl verwendet.

Nach Ende der Reaktion wurde das Kompositoxid 2 Li₂TiO₃/3 TiO₂ abfiltriert. Nach Waschen des Filterkuchens wurde dieser bei 80 °C getrocknet. Anschließend wurde das Kompositoxid 2 Li₂TiO₃/ 3 TiO₂ bei 750°C 5h lang kalziniert.

Schließlich wurde die kalzinierte Mischung in der Strahlmühle in einer Luft-Atmosphäre mit einem Taupunkt < -50°C und einer Temperatur von 25 °C eine Stunde lang fein vermahlen.

Der Wassergehalt des so erzeugten kohlenstoffhaltigen Li₄Ti₅O₁₂ gemäß Beispiel 5 betrug 300 ppm.

### Vergleichsbeispiel 5

Als Vergleichsbeispiel 5 wurde mit den gleichen Ausgangsmaterialien und dem gleichen Herstellungsverfahren kohlenstoffhaltiges Li₄Ti₅O₁₂ erzeugt. Das Vermahlen der kalzinierten Mischung erfolgte wie in Vergleichsbeispiel 1. Die Sinterung wurde hier über 5 h bei 750°C ausgeführt.

Der Wassergehalt des so erzeugten kohlenstoffhaltigen Li₄Ti₅O₁₂ des Vergleichsbeispiels 5 betrug 1720 ppm.

## Patentansprüche

1. Verfahren zur Herstellung eines Lithium-Titan-Mischoxids, umfassend
Bereitstellen einer Mischung aus Titandioxid und einer Lithiumverbindung oder Bereitstellen eines Lithium-Titan-Kompositoxids, das Li₂TiO₃ und TiO₂ umfasst,
Kalzinieren der Mischung oder des Lithium-Titan-Kompositoxids, und
nach dem Kalzinieren Vermahlen der Mischung oder des Lithium-Titan-Kompositoxids in einer Atmosphäre mit einem Taupunkt < -50°C
wobei das Lithium-Titan-Mischoxid dotiertes oder nicht dotiertes Li₄Ti₅O₁₂ ist.

2. Verfahren nach Anspruch 1, wobei als die Atmosphäre eine Atmosphäre umfassend mindestens ein Gas ausgewählt aus Schutzgas, Inertgas, Stickstoff und Luft, und/oder eine Atmosphäre mit einem Taupunkt < -70°C verwendet wird.

3. Verfahren nach einem der vorstehenden Ansprüche, wobei das Bereitstellen der Mischung das Zugeben von Kohlenstoff, einer Kohlenstoffverbindung oder einer Vorläuferverbindung von Pyrolysekohlenstoff, Vermahlen und/oder Kompaktieren der Mischung umfasst; und/oder wobei das Kalzinieren unter Schutzgas erfolgt.

4. Verfahren nach einem der vorstehenden Ansprüche, wobei als Lithiumverbindung Lithiumcarbonat und/oder ein Lithiumoxid verwendet wird; und/oder
wobei das Lithium-Titan-Kompositoxid Li₂TiO₃ und TiO₂, bei dem das molare Verhältnis von TiO₂ zu Li₂TiO₃ in einem Bereich von 1,3 bis 1,85 liegt, umfasst; und/oder
wobei das Kalzinieren bei einer Temperatur von 700°C bis 950°C erfolgt.

5. Verfahren nach einem der vorstehenden Ansprüche, wobei das Vermahlen mit einer Strahlmühle durchgeführt wird.

6. Lithium-Titan-Mischoxid, erhalten durch ein Verfahren nach einem der Ansprüche 1 bis 5,
wobei das Lithium-Titan-Mischoxid einen Wassergehalt ≤ 800 ppm, vorzugsweise ≤ 300 ppm besitzt; wobei das Lithium-Titan-Mischoxid dotiertes oder nicht dotiertes Li₄Ti₅O₁₂ ist.

7. Lithium-Titan-Mischoxid nach Anspruch 6, enthaltend 300 ppm oder weniger Wasser oder 800 ppm oder weniger Wasser, das durch Chemisorption oder reversible Chemisorption gebunden ist; und/oder wobei das Lithium-Titan-Mischoxid frei von durch Chemisorption oder reversible Chemisorption gebundenem Wasser ist.

8. Lithium-Titan-Mischoxid nach einem der Ansprüche 6 und 7, wobei das Lithium-Titan-Mischoxid nicht-dotiert oder mit mindestens einem Metall, ausgewählt aus Mg, Nb, Cu, Mn, Ni, Fe, Ru, Zr, B, Ca, Co, Cr, V, Sc, Y, La, Zn, Al, und Ga dotiert ist, und/oder ein weiteres Lithiumoxid enthält.

9. Lithium-Titan-Mischoxid nach einem der Ansprüche 6 bis 8, weiter umfassend eine Kohlenstoffbeschichtung.

10. Verwendung eines Lithium-Titan-Mischoxids nach einem der Ansprüche 6 bis 9 als Material für eine Elektrode und/oder eine Anode für eine Sekundärlithiumionenbatterie.

11. Anode für eine Sekundärlithiumionenbatterie, enthaltend das Lithium-Titan-Mischoxid nach einem der Ansprüche 6 bis 9.

12. Sekundärlithiumionenbatterie umfassend eine Anode nach Anspruch 11.

## Claims

1. A method for the production of a lithium-titanium mixed oxide, comprising:
providing a mixture of titanium dioxide and a lithium compound, or providing a lithium-titanium composite oxide comprising Li₂TiO₃ and TiO₂,
calcinating the mixture or lithium-titanium composite oxide, and
after calcination, grinding of the mixture or the lithium-titanium composite oxide in an atmosphere having a dew point < -50 °C,
wherein the lithium-titanium mixed oxide is doped or undoped Li₄Ti₅O₁₂.

2. Method according to claim 1, wherein the atmosphere used is an atmosphere comprising at least one gas selected from a shielding gas, an inert gas, nitrogen and air, and/or an atmosphere having a dew point <-70° C.

3. Method according to one of the preceding claims, wherein the provision of the mixture comprises the addition of carbon, a carbon compound or a precursor compound of pyrolytic carbon, the grinding and/or compacting of the mixture; and/or wherein calcination takes place under shielding gas.

4. Method according to one of the preceding claims, wherein the lithium compound used is lithium carbonate and/or a lithium oxide; and/or
wherein the lithium-titanium composite oxide comprises Li₂TiO₃ and TiO₂, in which the molar ratio of TiO₂ to Li₂TiO₃ is in a range between 1.3 and 1.85; and/or
wherein calcination takes place at a temperature of 700 °C to 950 °C.

5. Method according to one of the preceding claims, wherein grinding is performed with a jet mill.

6. Lithium-titanium mixed oxide obtained by a method according to one of the claims 1 to 5,
wherein the lithium-titanium mixed oxide has a water content ≤ 800 ppm, preferably ≤ 300 ppm; wherein the lithium-titanium mixed oxide is doped or undoped Li₄Ti₅O₁₂.

7. Lithium-titanium mixed oxide according to claim 6, containing 300 ppm water or less or 800 ppm water or less, which is bound by chemisorption or reversible chemisorption; and/or wherein the lithium-titanium mixed oxide is free of water bound by chemisorption or reversible chemisorption.

8. Lithium-titanium mixed oxide according to one of claims 6 and 7, wherein the lithium-titanium mixed oxide is undoped or doped with at least one metal selected from Mg, Nb, Cu, Mn, Ni, Fe, Ru, Zr, B, Ca, Co, Cr, V, Sc, Y, La, Zn, Al and Ga, and/or contains a further lithium oxide.

9. Lithium-titanium mixed oxide according to one of claims 6 to 8, further comprising a carbon coating.

10. Use of a lithium-titanium mixed oxide according to one of claims 6 to 9 as a material for an electrode and/or an anode for a secondary lithium ion battery.

11. Anode for a secondary lithium ion battery, containing the lithium-titanium mixed oxide according to one of claims 6 to 9.

12. A secondary lithium ion battery, comprising an anode according to claim 11.

## Revendications

1. Procédé pour la préparation d'un oxyde mixte de lithium-titane, comprenant
la préparation d'un mélange de dioxyde de titane et d'un composé de lithium ou la préparation d'un oxyde composite de lithium-titane, qui comprend du Li₂TiO₃ et du TiO₂,
la calcination du mélange ou de l'oxyde composite de lithium-titane et,
après la calcination, le broyage du mélange ou de l'oxyde composite de lithium-titane dans une atmosphère présentant un point de rosée < -50°C,
l'oxyde mixte de lithium-titane étant du Li₄Ti₅O₁₂ dopé ou non dopé.

2. Procédé selon la revendication 1, l'atmosphère utilisée étant une atmosphère comprenant au moins un gaz choisi parmi un gaz de protection, un gaz inerte, de l'azote et de l'air et/ou une atmosphère présentant un point de rosée < -70°C.

3. Procédé selon l'une quelconque des revendications précédentes, la préparation du mélange comprenant l'addition de carbone, d'un composé carboné ou d'un composé précurseur de carbone pyrolytique, le broyage et/ou le compactage du mélange ; et/ou la calcination ayant lieu sous un gaz de protection.

4. Procédé selon l'une quelconque des revendications précédentes, du carbonate de lithium et/ou un oxyde de lithium étant utilisé(s) comme composé de lithium ; et/ou
l'oxyde composite de lithium-titane comprenant du Li₂TiO₃ et du TiO₂, dont le rapport molaire de TiO₂ à Li₂TiO₃ se situe dans une plage de 1,3 à 1,85 ; et/ou la calcination ayant lieu à une température de 700°C à 950°C.

5. Procédé selon l'une quelconque des revendications précédentes, le broyage étant réalisé à l'aide d'un broyeur à jets.

6. Oxyde mixte de lithium-titane, obtenu par un procédé selon l'une quelconque des revendications 1 à 5,
l'oxyde mixte de lithium-titane présentant une teneur en eau ≤ 800 ppm, de préférence ≤ 300 ppm ; l'oxyde mixte de lithium-titane étant du Li₄Ti₅O₁₂ dopé ou non dopé.

7. Oxyde mixte de lithium-titane selon la revendication 6, contenant 300 ppm ou moins d'eau ou 800 ppm ou moins d'eau qui est liée par chimisorption ou par chimisorption réversible ; et/ou l'oxyde mixte de lithium-titane étant exempt d'eau liée par chimisorption ou par chimisorption réversible.

8. Oxyde mixte de lithium-titane selon l'une quelconque des revendications 6 et 7, l'oxyde mixte de lithium-titane étant non dopé ou étant dopé par au moins un métal, choisi parmi Mg, Nb, Cu, Mn, Ni, Fe, Ru, Zr, B, Ca, Co, Cr, V, Sc, Y, La, Zn, Al et Ga et/ou contenant un autre oxyde de lithium.

9. Oxyde mixte de lithium-titane selon l'une quelconque des revendications 6 à 8, comprenant en outre un revêtement carboné.

10. Utilisation d'un oxyde mixte de lithium-titane selon l'une quelconque des revendications 6 à 9 comme matériau pour une électrode et/ou une anode pour un accumulateur lithium-ion.

11. Anode pour un accumulateur lithium-ion, contenant l'oxyde mixte de lithium-titane selon l'une quelconque des revendications 6 à 9.

12. Accumulateur lithium-ion comprenant une anode selon la revendication 11.
